# EUROPEAN PATENT APPLICATION

(11) **EP 4 726 495 A1**
(43) Date of publication of application: **15.04.2026**
(21) Application number: 24917984.7
(22) Date of filing: 09.07.2024
(51) Int. Cl.: G06F 1/12

(54) **TIME SYNCHRONIZATION METHOD AND APPARATUS FOR CHIP, AND ELECTRONIC DEVICE AND STORAGE MEDIUM**

(30) Priority: 19.01.2024 CN 202410083732
(71) Applicant: Beijing Horizon Information Technology Co., Ltd., Beijing 100094 (CN)
(72) Inventor: WANG, Li, Beijing 100094 (CN)
(74) Representative: Müller-Boré & Partner Patentanwälte PartG mbB
(86) International application number: PCT/CN2024/104550
(87) International publication number: WO 2025/152371

(57) **Abstract**

Embodiments of the present disclosure disclose a method and apparatus for chip time synchronization, an electronic device and a storage medium. The method includes: generating a pulse signal according to a preset period; in response to the pulse signal, capturing a time snapshot of at least one timer in at least one chip, the time snapshot representing time information of the timer in a preset state of the pulse signal; and performing time synchronization on each timer in the at least one chip based on the time snapshot of each timer. The embodiments of the present disclosure can implement, based on a uniform time snapshot, synchronization among a plurality of chips and among timers corresponding to a plurality of processor cores in a chip, and since the time snapshot can be captured completely by hardware, without involvement of software, the present disclosure can effectively reduce the error and lower the possibility of introduction of a delay while improving the accuracy of time synchronization.

## Description

### CROSS-REFERENCE TO RELATED APPLICATION(S)

The present disclosure claims the priority from the CN patent application No. 202410083732.5 entitled "METHOD AND APPARATUS FOR CHIP TIME SYNCHRONIZATION, ELECTRONIC DEVICE AND STORAGE MEDIUM" filed on January 19, 2024, the content of which is hereby incorporated by reference in its entirety.

### FIELD

The present disclosure relates to the field of computer-assisted driving technology, and more specifically, to a method and apparatus for chip time synchronization, an electronic device and a storage medium.

### BACKGROUND

Time synchronization is a basis for sensor data fusion in scenarios such as intelligent driving or the like. The time synchronization typically includes two key steps, namely measuring a time error and adjusting time. Wherein, measurement of a time error is generally measuring a time difference between a slave clock and a master clock, and adjustment of time is generally compensating the slave clock for time based on the time difference, to achieve time synchronization of the slave clock with the master clock. A System on Chip (SOC) typically includes a plurality of hardware timers such as a Real_time Clock (RTC), a hardware timer inside an Ethernet card, a hardware timer of a Peripheral Component Interconnect Express (PCIE) module, and the like. These hardware timers maintain time of respective modules, and are generally distributed, for a chip, in one or more core domains each including a processor core (which may also be shortened as core) and at least one hardware timer corresponding to the core, where software of a processor core cannot access a hardware timer corresponding to a further processor core. If hardware timers respectively corresponding to multiple processor cores in a single chip are synchronized through multi-stage synchronization, a great delay may be introduced.

### SUMMARY

Embodiments of the present disclosure provide a method and apparatus for chip time synchronization, an electronic device and a storage medium, which can effectively avoid or lower introduction of a delay, while improving the accuracy of time synchronization.

In an aspect of the embodiments of the present disclosure, there is provided a method for chip time synchronization, comprising: generating a pulse signal according to a preset period; in response to the pulse signal, capturing a time snapshot of at least one timer in at least one chip, the time snapshot representing time information of the timer in a preset state of the pulse signal; and performing time synchronization on each timer in the at least one chip based on the time snapshot of each timer.

In a further aspect of the embodiments of the present disclosure, there is provided an apparatus for chip time synchronization, comprising: a pulse signal generation module configured to generate a pulse signal according to a preset period; a time snapshot capturing module configured to, in response to the pulse signal, capture a time snapshot of at least one timer in at least one chip, the time snapshot representing time information of the timer in a preset state of the pulse signal; and a time synchronization module configured to perform time synchronization on each timer in the at least one chip based on the time snapshot of each timer.

In a further aspect of the embodiments of the present disclosure, there is provided a computer readable storage medium having a computer program stored thereon, wherein the computer program is used to execute the method for chip time synchronization of any of the above-described embodiments of the present disclosure.

In a still further aspect of the embodiments of the present disclosure, there is provided an electronic device, comprising: a processor; and a memory for storing the executable instructions by the processor; wherein the processor is used to read the executable instructions from the memory, and execute the instructions to implement the method for chip time synchronization of any of the above-described embodiments of the present disclosure; or the electronic device comprises the apparatus for chip time synchronization of any of the above-described embodiments of the present disclosure.

In a still further aspect of the embodiments of the present disclosure, there is a computer program product, where instructions in the computer program product, when executed by a processor, cause the processor to execute the method for chip time synchronization of any of the above-described embodiments of the present disclosure.

According to the method, apparatus, electronic device and the storage medium provided by the above-described embodiments of the present disclosure, a time snapshot of at least one hardware timer in at least one chip may be captured based on periodic pulse signal triggering, and time synchronization for each timer may then be performed based on the time snapshot, to thus achieve time synchronization between a plurality of chips and between timers corresponding to a plurality of processor cores in a chip based on a uniform time snapshot. Since the time snapshot can be captured completely by hardware, without involvement of software, the present disclosure can effectively reduce the error and lower the possibility of introduction of a delay while improving the accuracy of time synchronization.

### BRIEF DESCRIPTION OF THE DRAWINGS

Fig. 1 illustrates an example application scenario of a method for chip time synchronization provided by the present disclosure;
Fig. 2 illustrates a schematic flowchart of a method for chip time synchronization provided by an example embodiment of the present disclosure;
Fig. 3 illustrates a schematic flowchart of a method for chip time synchronization provided by another example embodiment of the present disclosure;
Fig. 4 illustrates a schematic diagram of time snapshots of different timers provided by an example embodiment of the present disclosure;
Fig. 5 illustrates a schematic flowchart of a method for chip time synchronization provided by a further example embodiment of the present disclosure;
Fig. 6 illustrates a schematic flowchart of a method for chip time synchronization provided by a still further example embodiment of the present disclosure
Fig. 7 illustrates a schematic flowchart of a method for chip time synchronization provided by a still further example embodiment of the present disclosure;
Fig. 8 illustrates a schematic diagram of a principle of a method for chip time synchronization provided by an example embodiment of the present disclosure;
Fig. 9 illustrates a schematic flowchart of a method for chip time synchronization provided by a still further example embodiment of the present disclosure;
Fig. 10 illustrates a schematic flowchart of a method for chip time synchronization provided by a still further example embodiment of the present disclosure;
Fig. 11 illustrates a schematic diagram of a principle of a method for chip time synchronization provided by another example embodiment of the present disclosure;
Fig. 12 illustrates a schematic diagram of a structure of an apparatus for chip time synchronization provided by an example embodiment of the present disclosure;
Fig. 13 illustrates a schematic diagram of a structure of an apparatus for chip time synchronization provided by another example embodiment of the present disclosure;
Fig. 14 illustrates a schematic diagram of a structure of an apparatus for chip time synchronization provided by a further example embodiment of the present disclosure;
Fig. 15 illustrates a schematic diagram of a structure of an apparatus for chip time synchronization provided by a still further example embodiment of the present disclosure;
Fig. 16 illustrates a schematic diagram of a structure of an apparatus for chip time synchronization provided by a still further example embodiment of the present disclosure;
Fig. 17 illustrates a schematic diagram of a structure of an apparatus for chip time synchronization provided by a still further example embodiment of the present disclosure; and
Fig. 18 illustrates a diagram of a structure of an electronic device provided by embodiments of the present disclosure.

### DETAILED DESCRIPTION OF EMBODIMENTS

In order to illustrate the present disclosure, reference below will be made to drawings to describe in detail example embodiments of the present disclosure. Apparently, the embodiments described herein are only a part of the embodiments of the present disclosure, not all of them. It would be appreciated that the present disclosure is not limited to those example embodiments.

It is worth noting that: unless indicated clearly otherwise, the relative arrangement, numerical expressions, and numerical values of components and steps described in those embodiments do not limit the scope of the present disclosure.

### Overview of present disclosure

In the process of implementing the present disclosure, the inventor has realized that time synchronization is a basis for sensor data fusion in scenarios such as intelligent driving or the like. The time synchronization typically includes two key steps, namely measuring a time error and adjusting time. Wherein, measurement of a time error is generally measuring a time difference between a slave clock and a master clock, and adjustment of time is generally compensating the slave clock for time based on the time difference, to achieve time synchronization of the slave clock with the master clock. A System on Chip (SOC) typically includes a plurality of hardware timers such as a Real_time Clock (RTC), a hardware timer in an Ethernet card (which is also shortened as network card timer), a hardware timer of a Peripheral Component Interconnect Express (PCIE) module, and the like. These hardware timers maintain time of respective modules, and are generally distributed, for a chip, in one or more core domains each including a processor core (which may also be shortened as core) and at least one hardware timer corresponding to the core, where software of a processor core cannot access a hardware timer corresponding to a further processor core. If hardware timers respectively corresponding to multiple processor cores in a single chip are synchronized through multi-stage synchronization, a significant delay may be introduced.

### Example Overview

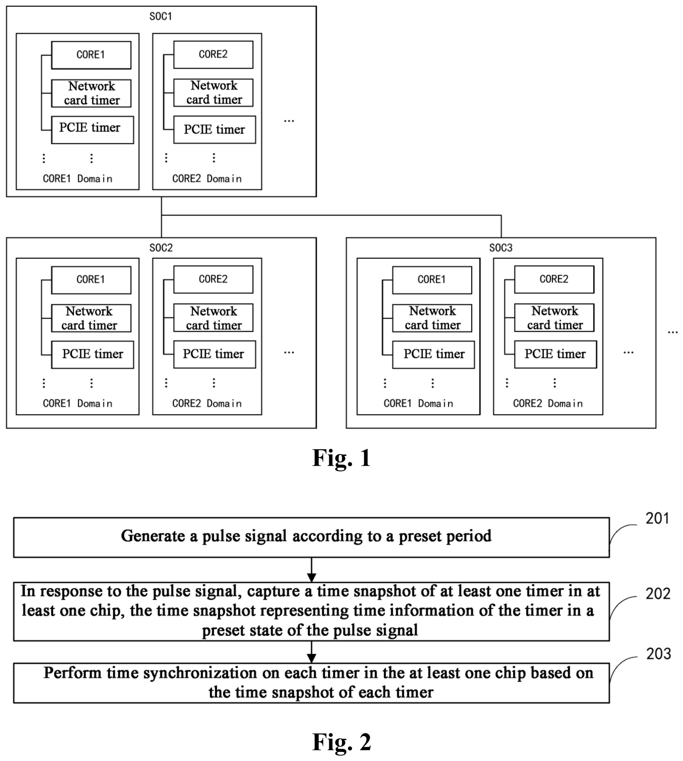

Fig. 1 illustrates an example application scenario of a method for chip time synchronization provided by the present disclosure. As shown in Fig. 1, in a scenario where time synchronization is required for at least one chip (SOC), for example, autonomous driving, assisted driving, and the like, three chips (including SOC1, SOC2 and SOC3) are taken as an example in Fig. 1, where each chip may include one more core domains, for example, CORE1 Domain, CORE2 Domain, ... as shown in Fig. 1, and each core domain may include a core and one or more timers corresponding to the core, for example, a core (e.g. CORE 1 in Fig. 1), a network card timer, a PCIE timer, and the like. The method for chip time synchronization according to the present disclosure may include: generating, by any one (e.g. SOC1) of at least one chip, a pulse signal according to a preset period; in response to the pulse signal, capturing a time snapshot of at least one timer in the at least one chip, where the time snapshot represents time information of a timer in a preset state of the pulse signal; and performing time synchronization on each timer in the at least one chip based on the time snapshot of each timer. The present disclosure can implement, based on a uniform time snapshot, time synchronization between a plurality of chips and between timers corresponding to a plurality of processor cores in a chip, and since the time snapshot can be captured completely by hardware, without involvement of software, the present disclosure can effectively reduce the error and lower the possibility of introduction of a delay while improving the accuracy of time synchronization.

In addition to the scenario of intelligent driving, the method for chip time synchronization according to the present disclosure may also be applied to any other scenarios where time synchronization is required for a chip, which are not specifically limited herein.

### Example Methods

Fig. 2 illustrates a schematic flowchart of a method for chip time synchronization provided by an example embodiment of the present disclosure. The present embodiment may be applied to an electronic device, for example, an in-vehicle computing platform. As shown in Fig. 2, the method according to the embodiment of the present disclosure may include the following steps:
Step 201: generating a pulse signal according to a preset period.

Wherein, the preset period may be any period. For example, the preset period may be 1 second, 2 seconds, 5 seconds, and the like, or may be 1 millisecond, 2 milliseconds, 4 milliseconds, and the like, or may be 1 microsecond, 2 microseconds, 4 microseconds, and the like. The specific preset period and the time scale of the period may be set as actually required.

In some optional embodiments, the pulse signal may include a high-level (or 1) signal and a low-level (or 0) signal.

In some optional embodiments, a pulse signal may be generated by any feasible pulse signal generation circuit. For example, a pulse signal generation circuit may be arranged in any timer circuit, which may trigger generation of a pulse signal when the timer reaches the end of the preset period, for example, which may change a low-level signal to a high-level signal.

In some optional embodiments, a common timer may also be arranged in any of the chips, by which a pulse signal is generated.

In some optional examples, the step 201 may be executed by calling, by the processor, a corresponding instruction stored in the memory, or may be implemented by a hardware circuit of a pulse signal generation module.

Step 202: in response to the pulse signal, capturing a time snapshot of at least one timer in at least one chip, the time snapshot representing time information of the timer in a preset state of the pulse signal.

Wherein, the at least one chip is a chip to undergo time synchronization. The number of chips may be set as actually required. Each chip may include at least one timer, for example, the RTC, the network card timer, the PCIE timer, and the like, as mentioned above.

In some optional embodiments, for any timer, the hardware circuit of the timer may capture the time snapshot of the timer in response to the pulse signal. For example, in response to the pulse signal in a preset state, the hardware circuit of the timer may capture the time snapshot of the timer, and may then write the time snapshot into a register for subsequent time synchronization. The preset state may be a rising edge of the pulse signal, i.e., a state at a time point when the pulse signal is changed from the low level to the high level.

In some optional examples, the step 202 may be executed by calling, by the processor, a corresponding instruction stored in the memory, or may be implemented by a hardware circuit of the time snapshot capturing module.

Step 203: performing time synchronization on each timer in the at least one chip based on the time snapshot of each timer.

Wherein, after capturing the time snapshot of each timer, time synchronization may be performed on each timer to undergo time synchronization according to the time synchronization requirement. For example, if a timer A among the timers is used as a master clock (or master time), time of each of further timers, other than the timer A, among the timers are to be synchronized with time of the timer A. For another example, if multiple timers among the timers are used as master clocks respectively, time of each of the further timers is respectively synchronized with time of corresponding master clock, to form a plurality of time domains. The specific time synchronization method may be set as actually required.

In some optional embodiments, for time synchronization of a plurality of timers within a chip, a preset timer within the chip may be used as the master clock while further timers, other than the preset timer, within the chip are used as slave clocks (or slave times), and time of each of the further timers is adjusted to be synchronized with time of the preset timer.

In some optional embodiments, for time synchronization of a plurality of chips, each chip may include one or more timers; a preset chip among the plurality of chips may be used as the master chip; a preset timer in the master chip acts as the master clock, while further timers, other than the preset timer, in the master chip as well as timers in further chips, other than the preset chip, among the plurality of chips are used as slave clocks; each of the slave clocks is adjusted based on a timer difference between the time snapshot of the slave clock and the time snapshot of the master clock, to thus be time synchronized with the master clock. Alternatively, a plurality of timers in the master chip are used as the master clocks respectively, and time of each of the further timers is respectively synchronized with time of corresponding master clock, to form a plurality of time domains. For example, the network card timer and the PCIE timer corresponding to the preset core of the master chip are used respectively as the master clocks; network card timers corresponding to further cores in the master chip, and time of each of network card timers of further chips is synchronized with time of the network card timer corresponding to the preset core of the master chip, and PCIE timers corresponding to further cores in the master chip, and time of each of PCIE timers of further chips is synchronized with time of the PCIE timer corresponding to the preset core of the master chip, to form two time domains, namely a network card time domain and a PCIE time domain. The number of specific time domains may be set according to the actual synchronization need.

In some optional embodiments of the present disclosure, for time synchronization of timers, the time snapshot of the timer acting as the master clock, and the time snapshot of the timer acting as the slave clock may be obtained by the processor of the chip, and the time of the timer acting as the slave clock may be adjusted based on the time snapshot of the master clock and the time snapshot of the slave clock, to accomplish the purpose of time synchronization. In a case that the processor of the chip includes a plurality of cores, for a timer corresponding to each core, the time snapshot of the master clock, and the time snapshot of the slave clock corresponding to the core may be obtained by the core, and then, the time of the timer acting as the slave clock may be adjusted based on the time snapshot of the master clock and the time snapshot of the slave clock, to accomplish the purpose of time synchronization. Optionally, the processor of the chip, or each core in the processor may adjust the time of the timer acting as the slave clock based on the time snapshot of the master clock and the time snapshot of the slave clock by executing a time synchronization software program, such that time of the timer of the slave clock may be synchronized with time of the timer of the corresponding master clock.

In some optional examples, the step 203 may be executed by calling, by the processor, a corresponding instruction stored in the memory, or may be implemented by a time synchronization module.

The method for chip time synchronization provided by this embodiment may include: capturing a time snapshot of at least one hardware timer in at least one chip based on periodic pulse signal triggering, and then performing time synchronization on each timer based on the time snapshot, to thus achieve time synchronization between a plurality of chips and between timers corresponding to a plurality of processor cores in a chip based on a uniform time snapshot. Since the time snapshot can be captured completely by hardware, without involvement of software, the present disclosure can effectively reduce the error and lower the possibility of introduction of a delay while improving the accuracy of time synchronization.

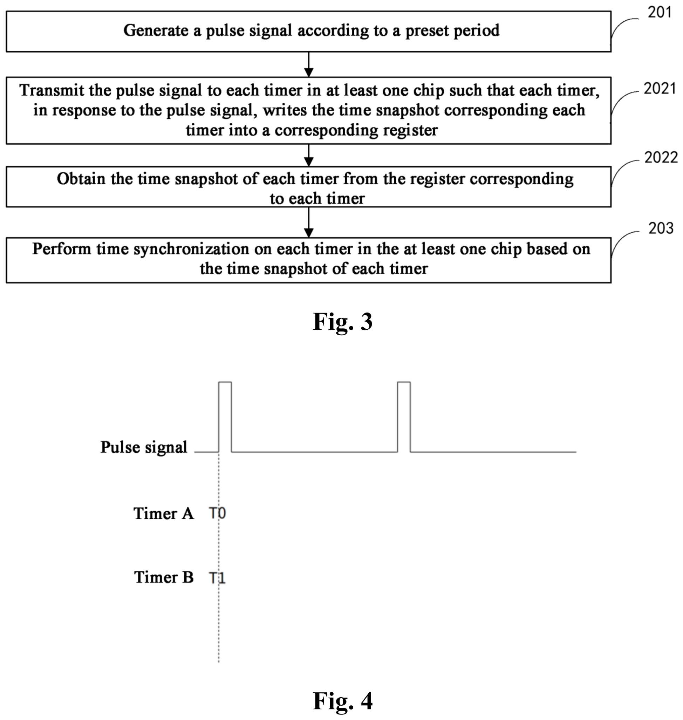

Fig. 3 illustrates a schematic flowchart of a method for chip time synchronization provided by another example embodiment of the present disclosure.

In some optional embodiments, as shown in Fig. 3, the step 202 of, in response to the pulse signal, capturing the time snapshot of the at least one timer in the at least one chip, may include:

step 2021: transmitting the pulse signal to each timer in the at least one chip such that each timer, in response to the pulse signal, writes the time snapshot corresponding each timer into a corresponding register.

Wherein, the generated pulse signal may be transmitted to each timer in each chip, to trigger each timer to capture the time snapshot thereof and write the same into a corresponding register.

In some optional embodiments, any feasible method may be used to transmit the pulse signal to each timer in each chip. For example, the pulse signal output end of the timer that generates a pulse signal may be connected to a time snapshot capturing circuit of each timer in each chip, and may also be connected to the time snapshot capturing circuit of the timer that generates the pulse signal. In a case that the pulse signal enters a preset state, the pulse signal output end may trigger the time snapshot capturing circuit of each timer to capture time information of the timer in the preset state of the pulse signal, as the time snapshot of the timer, and may set, for each timer, a register for storing the time snapshot of the timer, to thus allow the captured time snapshot to be written in the register for storage.

In some optional examples, the step 2021 may be executed by calling, by the processor, a corresponding instruction stored in the memory, or may be implemented by hardware circuits of the pulse signal transmission unit, the capturing unit, the register and the like.

Step 2022: obtaining the time snapshot of each timer from the register corresponding to each timer.

Wherein, the processor (or each core in the processor) of each chip may obtain, from registers corresponding to the timers, a time snapshot of a timer acting as the master clock, and a time snapshot of a timer acting as the slave clock in the processor.

In some optional embodiments, the register may be arranged inside or outside the timer, and connected to the time snapshot capturing circuit of the timer, to enable the time snapshot capturing circuit to write the time snapshot into the register.

In some optional examples, the step 2022 may be executed by calling, by the processor, a corresponding instruction stored in the memory, or may be implemented by a snapshot obtaining unit executed by the processor.

By transmitting the pulse signal to each timer, triggering each timer while capturing the time snapshot, and writing the time snapshot into the register, to record time information of each timer at the same time point, this embodiment can achieve accurate measurement of the time difference between the master clock and the slave clock, and can leave out delay compensation, thus improving the accuracy of time synchronization.

In some optional embodiments, Fig. 4 illustrates a schematic diagram of time snapshots of different timers provided by an example embodiment of the present disclosure. As shown in Fig. 4, the timer A and the timer B are two timers, T0 is a time snapshot captured by hardware (a capturing circuit) of the timer A, and T1 is a time snapshot captured by hardware of the timer B. In the rising edge (i.e., the preset state) of the pulse signal, the hardware of the timer A and the timer B simultaneously capture the time snapshots, and the resulting T0 and T1 indicate time information of the timer A and the timer B at the same time point (i.e., the rising edge of the pulse signal), and the time difference may be calculated by subtracting T1 from T0, which may be used in time synchronization of the timer B with the timer A. On the basis, after obtaining the time snapshot of each timer, the time difference between the timer acting as the master clock and the timer acting as the slave clock may be calculated according to the actual synchronization need, to compensate the timer acting as the slave clock for time, such that time of the slave timer may be synchronized with time of the master timer.

In some optional embodiments, step 2022 of obtaining the time snapshot of each timer from the register corresponding to each timer, may include:

detecting an interrupt request that is triggered based on the pulse signal, or based on the register corresponding to each timer; and in response to detecting the interrupt request, obtaining the time snapshot of each timer from the register corresponding to each timer.

Wherein, the processor (or each core in the processor) of each chip may detect an interrupt request. The interrupt request may be triggered based on the pulse signal, or may be triggered based on the register corresponding to each timer. For example, the pulse signal may be transmitted to a logic device; the logic device is connected to the processor (or core) and may transmit the interrupt signal to the processor (or core); the processor (or core) detects the interrupt signal and acknowledges that the interrupt request is detected. For another example, when a new time snapshot is written into the register, the interrupt signal may be triggered, and the processor (or core) detects the interrupt request and acknowledges that the interrupt request is detected. upon detecting the interrupt request, the processor may obtain the time snapshot of the master clock timer, and the time snapshot of the slave clock timer within the processor, or each core obtains the time snapshot of the master clock timer, and the time snapshot of the slave clock timer corresponding to the core, to compensate the slave clock timer within the processor for time, such that time of the slave clock timer may be synchronized with time of the master clock timer. That is, each processor is responsible for synchronizing the slave clock timer therein with the master clock timer, or each core is in charge of synchronizing the slave clock timer corresponding thereto with the master clock timer.

In some optional embodiments, for time synchronization of a plurality of chips, if the master clock timer is arranged in the preset chip, the chips, other than the preset chip, among the plurality of chips may obtain the time snapshot of the master clock timer from the preset chip via a communication interface with the preset chip.

By triggering an interrupt request via a pulse signal or a register corresponding to each timer, and obtaining the time snapshot of the timer from the register corresponding to the timer in response to detecting the interrupt request, this embodiment can implement real-time and effective triggering of time synchronization, ensure that accurate and valid snapshots can be obtained, and avoid obtaining incorrect time snapshots since no new time snapshot has been captured, thus improving the reliability of time synchronization.

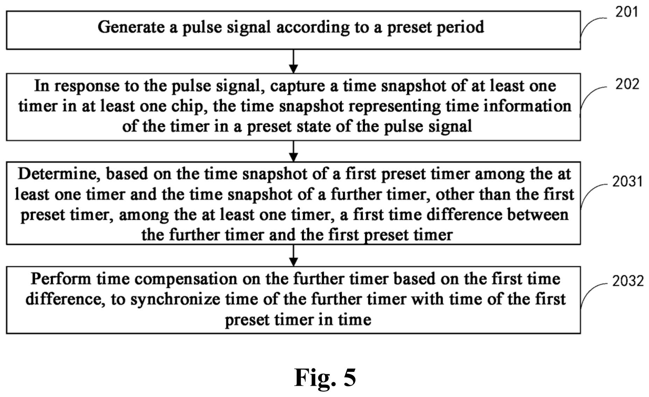

Fig. 5 illustrates a schematic flowchart of a method for chip time synchronization provided by a further embodiment of the present disclosure.

In some optional embodiments, as shown in Fig. 5, the step 203 of performing time synchronization on each timer in the at least one chip based on the time snapshot of each timer, may include:

Step 2031: determining, based on the time snapshot of a first preset timer among the at least one timer and the time snapshot of a further timer, other than the first preset timer, among the at least one timer, a first time difference between the further timer and the first preset timer.

Wherein, the first preset timer may be a preset timer acting as the master clock. The further timers act as slave clocks. The number of the further timers may be one or more.

In some optional embodiments, for time synchronization of a chip, if the chip processor is a single-core processor, the processor of the chip obtains the time snapshot of the first preset timer and a time snapshot of a further timer, and calculates a time difference between the time snapshot of the further timer and the time snapshot of the first preset timer as a first time difference between the further timer and the first preset timer. If the chip processor includes a plurality of cores, each core obtains the time snapshot of the first preset timer and the time snapshot of a further timer corresponding to the core, and determines the first time difference between the further timer corresponding to the core and the first preset timer.

In some optional embodiments, for time synchronization of a plurality of chips, each chip determines a first time difference between the further timer within the chip and the first preset timer in the manner described in the above embodiment (e.g. two cases, namely a single core and multiple cores). It would be appreciated that, for a preset chip where the first preset timer is located, the preset chip may directly obtain the time snapshot of the first preset timer. For a chip not including the first preset timer, the chip may obtain the time snapshot of the first preset timer from the preset chip via a communication interface with the preset chip including the first preset timer. For example, upon capturing the time snapshot, the preset chip may send the time snapshot of the first preset timer to the further chip via the communication interface.

In some optional examples, the step 2031 may be executed by calling, by the processor, a corresponding instruction stored in the memory, or may be implemented by a time difference determining unit.

Step 2032: performing time compensation on the further timer based on the first time difference, to synchronize time of the further timer with time of the first preset timer.

Wherein, each of the further timers may have a corresponding first time difference. For any of the further timers, the time compensation is performed on the further timer based on the first time difference corresponding to the further timer. The first time difference characterizes a time difference between the further timer and the first preset timer, and therefore, by compensating the further timer for time based on the first time difference, the difference between the further timer and the first preset timer can be eliminated or reduced, thus accomplishing the purpose of time synchronization.

In some optional examples, the step 2032 may be executed by calling, by the processor, a corresponding instruction stored in the memory, or may be implemented by a time compensation unit.

In this embodiment, the first time difference between the time snapshot of the further timer and the time snapshot of the first preset timer is calculated; then, time compensation may be performed on the further timer based on the first time difference to cause time of the further timer to be synchronized with time of the first preset timer; since the first time difference is calculated based on the time snapshots of two timers at the same time point, the first time difference has a high accuracy, which can improve the accuracy of time synchronization of the further timer with the first preset timer.

In some optional embodiments, the step 2031 of determining, based on the time snapshot of a first preset timer among the at least one timer and the time snapshot of a further timer, other than the first preset timer, among the at least one timer, a first time difference between the further timer and the first preset timer, may include:

in a case of using each of the at least one chip as a target chip respectively, in response to the target chip comprising the first preset timer, determining, based on the time snapshot of the further timer, other than the first preset timer, in the target chip, the first time difference between the further timer and the first preset timer; and transmitting the time snapshot of the first preset timer to the further chip, other than the target chip, among the at least one chip; and in response to the target chip not comprising the first preset timer, receiving the time snapshot of the first preset timer from a chip comprising the first preset timer, and determining, based on the time snapshot of the first preset timer and the time snapshot of each timer in the target chip, the first time difference between each timer and the first preset timer.

Wherein, for each chip among the at least one chip, the chip is used as the target chip; if the target chip includes a first preset timer, based on the time snapshot of the further timer, other than the first preset timer, in the target chip and the time snapshot of the first preset timer, a first time difference between the further timer and the first preset timer may be calculated. Specifically, for any of the further timers, the difference of the time snapshot of the first preset timer from the time snapshot of the further timer may be used as the first time difference, or the difference of the time snapshot of the further timer from the time snapshot of the first preset timer may be used as the first time difference, which is not specifically limited herein. Moreover, after capturing the time snapshot, the target chip may transmit the time snapshot of the first preset timer to the further chips, other than the target chip, among the at least one chip, to enable the further chips to use the first preset timer as the master clock timer and synchronize timers therein in time. Specifically, the target chip may transmit the time snapshot of the first preset timer to further chips via the communication interfaces with other chips. The communication interface may be any feasible interface, for example, a Serial Peripheral Interface (SPI), an Inter IC (I2C), a CAN interface, a Universal Asynchronous Receiver-Transmitter (UART), an Ethernet communication interface, and the like, which may be set flexibly as actually required. If the target chip includes a plurality of cores, the first preset timer is a timer corresponding to a preset core among the plurality of cores, then each core may be used as the target core. If the timer corresponding to the target core includes the first preset timer, based on the time snapshot of a further timer, other than the first preset timer, corresponding to the target core and the time snapshot of the first preset timer, a first time difference between the further timer and the first preset timer may be determined. If timers corresponding to the target core do not include the first preset timer, the time snapshot from the first preset timer of the preset core may be received, and based on the time snapshot of each timer corresponding to the target core and the time snapshot of the first preset timer, a first time difference between each timer corresponding to the target core and the first preset timer may be calculated. The target core may obtain the first time difference of the first preset timer from the preset core through inter-core communication. If the first preset timer is a common timer outside the plurality of cores in the target chip, each core in the target chip may access the common timer to obtain the time snapshot of the first preset timer, and each core may calculate, based on the time snapshot of each timer corresponding to the core and the time snapshot of the first preset timer, a first time difference of each timer corresponding to the core from the first preset timer.

If the target chip does not include the first preset timer, the target chip may receive the time snapshot of the first preset timer from a chip including the first preset timer. The target chip may determine, based on the time snapshot of the first preset timer and the time snapshot of each timer in the target chip, a first time difference of each timer in the target chip from the first preset timer. Likewise, if the target chip includes a plurality of cores, each core may determine, based on the time snapshot of the first preset timer and the time snapshot of each timer corresponding to the core, a first time difference of each timer corresponding to the core from the first preset timer.

In this embodiment, time synchronization among a plurality of cores can be implemented, where time synchronization among timers of the plurality of cores can be achieved based on time snapshots of the timers at the same time point, and the first time difference thus calculated has a high accuracy, thus improving the accuracy of time synchronization among the plurality of cores.

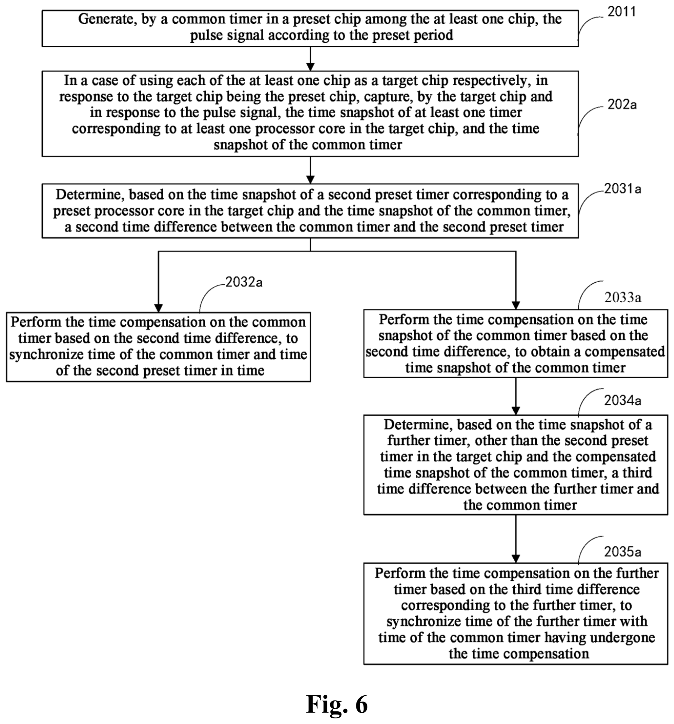

Fig. 6 illustrates a schematic flowchart of a method for chip time synchronization provided by a still further example embodiment of the present disclosure.

In some optional embodiments, each chip among the at least one chip may include at least one processor core; each processor core may correspond to at least one timer.

In some optional embodiments, as shown in Fig. 6, the step 201 of generating the pulse signal according to the preset period, may include:
step 2011: generating, by a common timer in a preset chip among the at least one chip, the pulse signal according to the preset period.

Wherein, the preset may be preset as actually required. A common timer may be provided in the preset chip, which may include a pulse signal generation circuit responsible for generating a pulse signal according to a preset period.

In some optional embodiments, the common timer may be connected to each timer in the preset chip and each timer in further chips, to transmit the pulse signal to each timer and thus trigger each timer to capture the time snapshot thereof in the preset state of the pulse signal.

In some optional embodiments, the common timer may be connected to each timer via a transmission line. Specifically, the pulse signal output end of the common timer is connected to the time snapshot capturing circuit of each timer to trigger the time snapshot capturing circuit to capture the time snapshot thereof, or the common timer may transmit the pulse signal to the time snapshot capturing circuit of the common timer to trigger the common timer to capture the time snapshot thereof.

In some optional embodiments, the pulse signal of the common timer may be transmitted to further chips via connections between a pin of the chip and pins of the further chips.

In some optional examples, the step 2011 may be executed by calling, by the processor, a corresponding instruction stored in the memory, or may be implemented by a common timer within a preset chip among the at least one chip.

The step 202 of, in response to the pulse signal, capturing the time snapshot of the at least one timer in the at least one chip, may include:
step 202a: in a case of using each of the at least one chip as a target chip respectively, in response to the target chip being the preset chip, capturing, by the target chip and in response to the pulse signal, the time snapshot of at least one timer corresponding to the at least one processor core in the target chip, and the time snapshot of the common timer.

Wherein, the preset chip is a chip including a common timer. If the target chip is a preset chip, in response to the pulse signal, the target chip may capture the time snapshot of each timer corresponding to each core in the target chip, and the time snapshot of the common timer. Specifically, it may be a time snapshot capturing circuit of each timer corresponding to each core in the target chip that captures the time snapshot of the timer in response to the pulse signal. The time snapshot capturing circuit of the common timer captures the time snapshot of the common timer in response to the pulse signal.

In some optional embodiments, the common timer may be arranged outside the cores within the preset chip, or may be arranged in the preset core (i.e., the preset processor core) within the preset chip. If the common timer is arranged outside the cores, each core within the preset chip may access the common timer to obtain the time snapshot of the common timer. In the circumstance, the access permission of each core to the common timer may be set. For example, only the preset core has the write and read access to the common timer while the further cores have only read access to the common timer. That is, the preset core can both read the time snapshot of the common timer and perform time compensation for the common timer, to synchronize time of the common timer with time of any timer corresponding to the preset core. By setting the access permission of each core to the common timer, the time reliability of the common timer can be guaranteed, to avoid instability of the time of the common timer caused by write access from different cores to the common timer. If the common timer is arranged in the preset core, the preset core may perform read and write access to the common timer, and further cores may only perform read access to the common timer, which, for example, may read the time snapshot of the common timer via inter-core communication, or may perform read access to the common timer in other manner. Alternatively, the common timer may be arranged outside of each core domain in the preset chip, for example, outside each domain of SOC1 in Fig. 1, and the access permission of each core of SOC1 to the common timer may be set. Alternatively, the common timer may be arranged in the preset core domain of the preset chip, for example, within CORE1 Domain of SOC1 in Fig. 1, such that the preset core in the preset core domain may perform read access and write access to the common timer while further cores, other than the preset core, may only perform read access to the common timer.

In some optional examples, step 202a may be executed by calling, by a processor, a corresponding instruction stored in the memory, or may be implemented by a first capturing unit corresponding to each timer in the preset chip and a second capturing unit corresponding to the common timer.

Step 203 of performing time synchronization on each timer in the at least one chip based on the time snapshot of each timer, may include the following steps:
step 2031a: determining, based on the time snapshot of a second preset timer corresponding to a preset processor core in the target chip and the time snapshot of the common timer, a second time difference between the common timer and the second preset timer.

Wherein, the preset processor core and the second preset timer may be set as any core and any timer corresponding to any core according to the actual chip time synchronization requirement. For example, the preset processor core may be CORE1 in Fig. 1, and the second preset timer may be a network card timer corresponding to CORE1 in CORE1 Domain in Fig. 1. A time difference between the common timer and the second preset timer may be calculated based on the time snapshot of the second preset timer and the time snapshot of the common timer, as a second time difference between the common timer and the second preset timer. For example, the difference between the time snapshot of the common timer and the time snapshot of the second preset timer may be used as the second time difference.

In some optional examples, step 2031a may be executed by calling, by the processor, a corresponding instruction stored in the memory, or may be implemented by a first time difference determining unit in the preset chip.

Step 2032a: performing the time compensation on the common timer based on the second time difference, to synchronize time of the common timer and time of the second preset timer.

Wherein, after obtaining the second time difference between the common timer and the second preset timer, the time compensation may be performed for the common timer based on the second time difference, to eliminate or reduce the time difference between the common timer and the second preset timer, to synchronize time of the common timer with time of the second preset timer.

In some optional embodiments, if the second time difference is a difference between the time snapshot of the common timer and the time snapshot of the second preset timer, the difference may be of a positive or negative value, and the time obtained by subtracting the second time difference from the time of the common timer may be used as the compensated time of the common timer. If the second time difference is a difference between the time snapshot of the second preset timer and the time snapshot of the common timer, the time obtained by adding the second time difference to the time of the common timer may be used as the compensated time of the common timer. For example, the time snapshot of the common timer is 500 microseconds, the time snapshot of the second preset timer is 800 microseconds, the second time difference is 300 microseconds, and in the case, the real time of the common timer is compensated 300 microseconds to synchronize time of the common timer with time of the second preset timer. For example, in the process of time compensation, the real time of the second preset timer is 1,000 microseconds, the real time of the common timer is 700 microseconds, and in the case, the real time of the common timer is compensated 300 microseconds, to obtain 1,000 microseconds as the real time of the common timer, i.e., to synchronize time of the common timer with time of the second preset timer. In the actual application, due to the difference between the hardware circuits of the timers, the difference between the real time of the common timer and the real time of the second preset timer, and the difference between the time snapshots are changed in a period from capturing the time snapshots to performing time compensation on the common timer. For example, during time compensation, the real time of the second preset timer is 1,000 microseconds, the real time of the common timer may be 650 microseconds, and the common timer is compensated 300 microseconds this time, to thus obtain 950 microseconds as the real time of the common timer, which can reduce the difference between the common timer and the second preset timer; the remaining difference of 50 microseconds can be reduced continuously by a next time synchronization operation and the following time synchronization operations, to implement time synchronization between the common timer and the second preset timer through multiple time synchronization operations. In the actual application, the time snapshot may be at other time scale such as nanosecond, or the like, rather than be limited to the microsecond as describe above.

In some optional examples, 2032a may be executed by calling, by the processor, a corresponding instruction stored in the memory, or may be implemented by a first time compensation unit in the preset chip.

Step 2033a: performing the time compensation on the time snapshot of the common timer based on the second time difference, to obtain a compensated time snapshot of the common timer.

Wherein, the time compensation principle for the time snapshot of the common timer is similar to that for the real time as described above, which will not be detailed herein. For example, a sum of the time snapshot of the common timer and the second time difference may be used as the compensated time snapshot of the common timer. Alternatively, the time snapshot of the second preset timer may also be used as the compensated time snapshot of the common timer.

In some optional examples, 2033a may be executed by calling, by the processor, a corresponding instruction stored in the memory, or may also be implemented by a second time different determining unit within the preset chip.

Step 2034a: determining, based on the time snapshot of a further timer, other than the second preset timer in the target chip and the compensated time snapshot of the common timer, a third time difference between the further timer and the common timer.

Wherein, for any of the further timers, a third difference (also referred to as third compensated time difference) between the further timer and the compensated common timer may be determined directly based on the time snapshot of the further timer and the compensated time snapshot of the common timer. Each of the further timers may correspond to a third time difference.

In some optional examples, the step 2034a may be executed by calling, by the processor, a corresponding instruction stored in the memory, or may be implemented by a second time difference determining unit in the preset chip.

Step 2035a: performing the time compensation on the further timer based on the third time difference corresponding to the further timer, to synchronize time of the further timer with time of the common timer having undergone the time compensation.

Wherein, for any of the further timers, the specific operation of the time compensation performed for the further timer based on the third time difference corresponding thereto is similar to that of the time compensation for the common timer as described above, which will not be detailed herein for brevity. For example, the time snapshot of the common timer is 500 microseconds, the time snapshot of the second preset timer is 800 microseconds, the second time difference is 300 microseconds, and in the case, the time snapshot of the common timer is compensated 300 microseconds, to obtain 800 microseconds as the compensated time snapshot. The time snapshot of the further timer B is 600 microseconds, the third time difference between the time snapshot of the further timer B and the compensated time snapshot of the common timer is 200 microseconds, and in the case, the real time of the further timer is compensated 200 microseconds, to eliminate or reduce the time difference between the further timer and the compensated common timer, and further eliminate or reduce the time difference between the further timer and the second preset timer.

In some optional examples, the step 2035a may be executed by calling, by the processor, a corresponding instruction stored in the memory, or may be implemented by a second time compensation unit in the preset chip.

It is worth noting that steps 2033a through 2035a and the step 2032a are not required in a particular order.

In this embodiment, time compensation is performed for the common timer based on the second time difference between the common timer and the second preset timer; then, a third time difference between a further timer and the common timer is determined based on the time snapshot of the further timer and the compensated time snapshot of the common timer, for use in time compensation of the further timer, which can eliminate or reduce the difference between the real time of the further timer and the real time of the compensated common timer, thus reducing the difference between the real time of the further timer and the real time of the second preset timer; time compensation between the further timer and the second preset timer is implemented using a common timer based on time snapshots captured by hardware at the same time point, which is not susceptible to software delay and can bring about a high synchronization accuracy. In addition, in this embodiment, the common timer can also be used to implement accurate and effective time synchronization among timers corresponding to a plurality of cores, and as compared with the multi-stage synchronization in the related technology that may easily introduce a significant delay, this embodiment can greatly lower the introduced delay and reduce the measurement error.

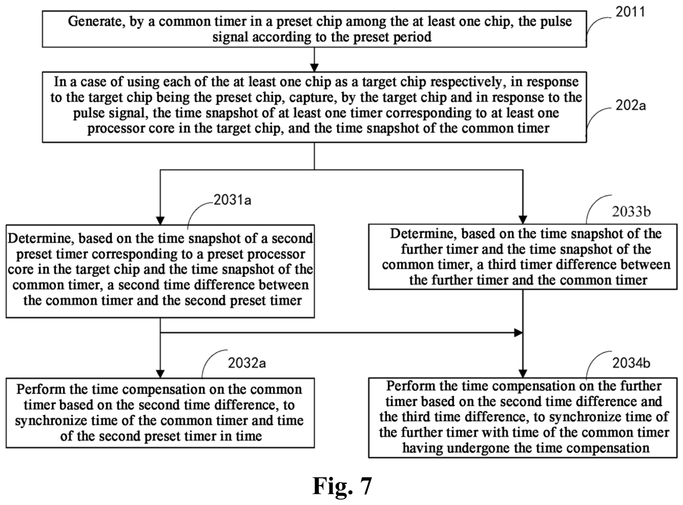

Fig. 7 illustrates a schematic flowchart of a method for chip time synchronization provided by a still further example embodiment of the present disclosure.

In some optional embodiments, as shown in Fig. 7, the step 203 of performing time synchronization on each timer in the at least one chip based on the time snapshot of each timer, may further include:

Step 2031a: determining, based on the time snapshot of a second preset timer corresponding to a preset processor core in the target chip and the time snapshot of the common timer, a second time difference between the common timer and the second preset timer.

Step 2032a: performing the time compensation on the common timer based on the second time difference, to synchronize time of the common timer and time of the second preset timer.

For the specific operations of the steps 2031a and 2032a in the embodiment, see the previous embodiments.

Step 2033b: determining, based on the time snapshot of the further timer and the time snapshot of the common timer, a third timer difference between the further timer and the common timer.

Wherein, for any of the further timers, based on the time snapshot of the further timer and the time snapshot of the common timer, the difference between the time snapshot of the further timer and the time snapshot of the common timer may be used as the third time difference (also referred to as third snapshot time difference) between the further timer and the common timer.

In some optional examples, the step 2033b may be executed by calling, by the processor, a corresponding instruction stored in the memory, or may be implemented by a second time difference determining unit in the preset chip.

Step 2034b: performing the time compensation on the further timer based on the second time difference and the third time difference, to synchronize time of the further timer with time of the common timer having undergone the time compensation.

Wherein, the second time difference characterizes a difference between the time snapshot of the common timer and the time snapshot of the second preset timer, and for any of the further timers, the third time difference characterizes a difference between the time snapshot of the further timer and the time snapshot of the common timer. By performing time compensation for the further timer based on the second time difference and the third time difference, the further timer may be compensated an amount of the time difference thereof from the second preset timer to synchronize time of the further timer with time of the second preset timer. By way of example, the time snapshot of the common timer is 500 microseconds, the time snapshot of the second preset timer is 800 microseconds, the second time difference is 300 microseconds, the time snapshot of the further timer B is 600 microseconds, the third time difference between the time snapshot of the further timer B and the time snapshot of the common timer is -100 microseconds, and in the case, the real time of the further timer is compensated 200 (= 300 - 100) microseconds, to significantly reduce the difference between the compensated real time of the further timer and the real time of the second preset timer.

In some optional examples, the step 2034b may be executed by calling, by the processor, a corresponding instruction stored in the memory, or may be implemented by a second time compensation unit in the preset chip.

By calculating the third time difference between the further timer and the common timer based on the time snapshot of the further timer and the time snapshot of the common timer, and performing time compensation on the further timer based on the second time difference between the common timer and the second preset timer, this embodiment can effectively eliminate or reduce the time difference between the further timer and the second preset timer, to implement time synchronization between the further timer and the second preset timer while improving the accuracy of the time synchronization.

In some optional embodiments, after determining the third time difference between the further timer and the common timer based on the time snapshot of the further timer and the time snapshot of the common timer, time compensation may be performed for the further timer based on the third time difference. In this way, during this time synchronization operation, only the difference between the time snapshot of the further timer and the time snapshot of the common timer is smoothed out, the second time difference between the common timer and the second preset timer remains and can be smoothed out in the next time synchronization operation, and so on. With the periodic time synchronization, the difference between the further timer and the second preset timer can be reduced continuously. For example, the time snapshot of the common timer is 600 microseconds, the time snapshot of the second preset timer is 800 microseconds, the second time difference is 200 microseconds, and in the case, the real time of the common timer is compensated 200 microseconds. The time snapshot of the further timer B is 500 microseconds, the third time difference between the time snapshot of the further timer B and the time snapshot of the common timer is 100 microseconds, and the time difference between the time snapshot of the further timer B and the time snapshot of the second preset timer is 300 microseconds. The real time of the further timer is compensated 100 microseconds such that the difference between the further timer and the second preset timer can be reduced by 100 microseconds. In the next time synchronization operation, the captured time snapshot of the second preset timer is, for example, 1,800 microseconds, and since the common timer is compensated during the previous time synchronization operation, the difference between the time snapshot of the common timer and the time snapshot of the second preset timer captured this time is greatly reduced as compared with the previous one (for instance, the time snapshot of the common timer may be 1,750 microseconds). Since the difference between the time snapshot of the further timer B and the time snapshot of the common timer includes the second time difference that the common timer was compensated previously, the time snapshot difference between the further timer B and the common timer may be increased as compared with the previous one (for instance, the time snapshot of the further timer B is 1,580 microseconds). During the current time synchronization, the second time difference between the common timer and the second preset timer is 50 microseconds, the third time difference between the time snapshot of the further timer B and the time snapshot of the common timer is 170 microseconds, and the time difference between the time snapshot of the further timer B and the time snapshot of the second preset timer is 220 microseconds; in the case, the common timer is compensated 50 microseconds, and the further timer B is compensated 170 microseconds. In this way, the difference between the real time of the further timer B and the real time of the second preset timer is reduced continuously, and with the multiple periodic time synchronization operation, time synchronization between the further timer B and the second preset timer can be gradually implemented.

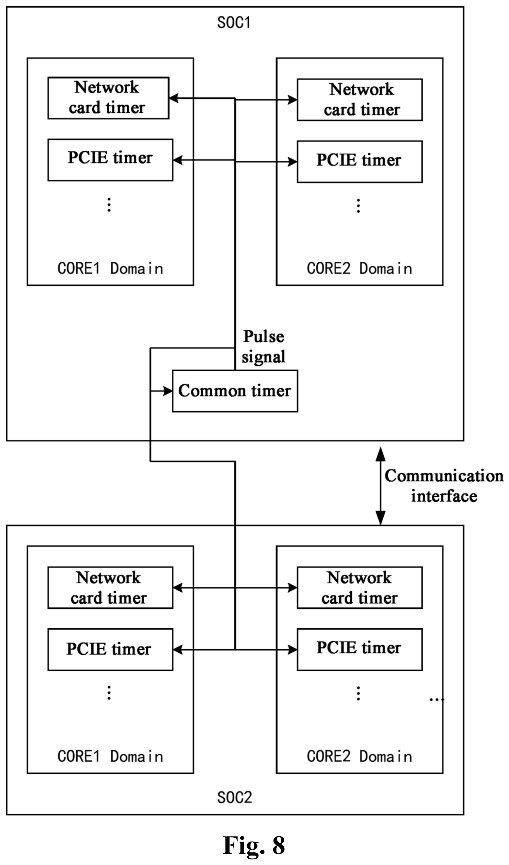

In some optional embodiments, Fig. 8 illustrates a schematic diagram of a principle of a method for chip time synchronization provided by an example embodiment of the present disclosure. As shown in Fig. 8, two chips SOC1 and SOC2 are taken as an example of the at least one chip, and by way of example, each chip includes two core domains CORE1 Domain and CORE2 Domain. Each core domain includes a core (not shown; see Fig. 1), and a plurality of timers corresponding to the core. It is assumed that SOC1 is the preset chip, the network card timer corresponding to CORE1 (which is the preset core) of SOC1 is a second preset timer, and SOC1 includes a common timer. The common timer generates a pulse signal according to a preset period, and then transmits the same to each timer corresponding to each core of SOC1 and each timer corresponding to each core of SOC2 via transmission channels, probably to the common timer *per se* as well, specifically the time snapshot capturing circuit of the common timer. When in a preset state, the pulse signal triggers each timer of each chip (including the common timer and the timers corresponding to each core) to capture the time snapshot of the timer. Each core of SOC1 may access the common timer to obtain the time snapshot of the common timer. Wherein, CORE1 of SOC1 may determine a second time difference between the common timer and the second preset timer based on the time snapshot of the common timer and the time snapshot of the second preset timer (the network card timer), and the common timer is compensated for time based on the second time difference, to be time synchronized with the second preset timer. CORE1 of SOC1 may synchronize further timers, other than the preset timer, corresponding thereto with the common timer, or may directly synchronize the further timers with the second preset timer. CORE2 of SOC1 may determine, based on the time snapshot of a further timer (also referred to as further timer) corresponding to the core and the time snapshot of the common timer, a third time difference between the further timer and the common timer, and the further timer may be compensated based on the third time difference, to be time synchronized with the common timer. Alternatively, CORE1 may transmit the second difference to CORE2, and CORE2 may compensate the further timer corresponding to CORE2 based on the second time difference and the third time difference, to synchronize time of the further timer corresponding to CORE2 with time of the second preset timer. Alternatively, CORE1 may send the compensated time snapshot of the common timer to CORE2, and CORE2 may determine the third time difference based on the compensated time snapshot of the common timer and the time snapshot of the further timer corresponding to CORE2, and then compensate the further timer for time. After capturing the time snapshot, SOC1 may also transmit the time snapshot or the compensated time snapshot of the common timer to SOC2 via the communication interface with SOC2, and each core of SOC2 may obtain the time snapshot or the compensated time snapshot of the common timer via the communication interface, and then compensate the timer corresponding to each core, to implement time synchronization of the timer corresponding to the core with the common timer or the compensated common timer and thus accomplish the purpose of time synchronization with the second preset timer.

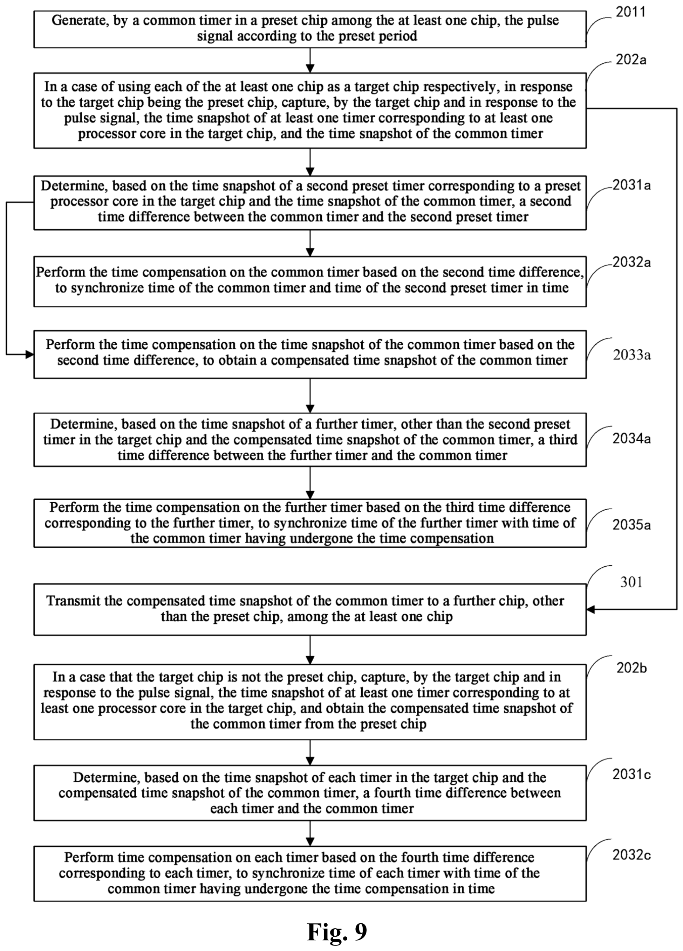

Fig. 9 illustrates a schematic flowchart of a method for chip time synchronization provided by a still further example embodiment of the present disclosure.

In some optional embodiments, as shown in Fig. 9, after capturing the time snapshot of the at least one timer corresponding to the at least one processor core in the target chip, and after the time snapshot of the common timer, the step 202a may further include:
step 301: transmitting the compensated time snapshot of the common timer to a further chip, other than the preset chip, among the at least one chip.

Wherein, in a case that the target chip is a preset chip, the target chip may transmit the compensated time snapshot of the common timer to the further chip. The further chip is, for example, SOC2 in Fig. 8. The target chip may transmit the compensated time snapshot of the common timer to the further chip via a communication interface with the further chip.

In some optional examples, the step 301 may be executed by calling, by a processor, a corresponding instruction stored in the memory, or may be implemented by a first transmission unit.

The step 202 of, in response to the pulse signal, capturing the time snapshot of the at least one timer in the at least one chip, may further include:
step 202b: in a case that the target chip is not the preset chip, capturing, by the target chip and in response to the pulse signal, the time snapshot of the at least one timer corresponding to the at least one processor core in the target chip, and obtaining the compensated time snapshot of the common timer from the preset chip.

Wherein, if the target chip is not the preset chip, the pulse signal generated by the common timer in the preset chip transmits to each timer in the target chip. In response to the pulse signal, each timer of the target chip captures the time snapshot thereof. The target chip may obtain the compensated time snapshot from the common timer of the preset chip via the communication interface.

In some optional examples, the step 202b may be executed by calling, by the processor, a corresponding instruction stored in the memory, or may be implemented by a third capturing unit and a first obtaining unit corresponding to each timer in further chips.

Step 203 of performing the time synchronization on each timer in the at least one chip based on the time snapshot of each timer, may further include:
step 2031c: determining, based on the time snapshot of each timer in the target chip and the compensated time snapshot of the common timer, a fourth time difference between each timer and the common timer.

Wherein, for any timer in the target chip, see the operation of determining the third time difference (the third compensated time difference) for the specific operation of determining a fourth time difference between the timer and the common timer based on the time snapshot of the timer and the compensated time snapshot of the common timer.

In some optional examples, the step 2031c may be executed by calling, by the processor, a corresponding instruction stored in the memory, or may be implemented by a third time difference determining unit in the other chip.

Step 2032c: performing time compensation on each timer based on the fourth time difference corresponding to each timer, to synchronize time of each timer with time of the common timer having undergone the time compensation.

Wherein, for the specific operation of time compensation, reference may be made to the previous embodiments, which will not be detailed herein for brevity.

In some optional examples, the step 2032c may be executed by calling, by the processor, a corresponding instruction stored in the memory, or may be implemented by a third time compensation unit in the further chip.

In this embodiment, for a target chip, which is not the preset chip, among the plurality of chips, the compensated time snapshot of the common timer may be obtained from the preset chip, and the time of the timer in the target chip may be synchronized with the compensated time of the common timer, to thus accomplish the purpose of time synchronization of the time of the target chip with the time of the second preset timer, and further implement time synchronization among timers corresponding to the plurality of cores of the plurality of chips while improving the accuracy of time synchronization.

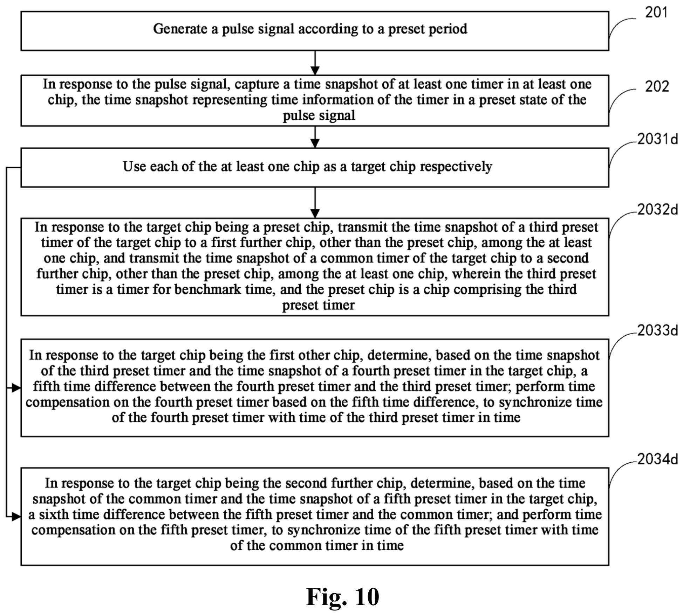

Fig. 10 illustrates a schematic flowchart of a method for chip time synchronization provided by a still further example embodiment of the present disclosure.

In some optional embodiments, as shown in Fig. 10, the step 203 of performing time synchronization on each timer in the at least one chip based on the time snapshot of each timer, may include:
step 2031d: using each of the at least one chip as a target chip respectively.

Step 2032d: in response to the target chip being a preset chip, transmitting the time snapshot of a third preset timer of the target chip to a first further chip, other than the preset chip, among the at least one chip, and transmitting the time snapshot of a common timer of the target chip to a second further chip, other than the preset chip, among the at least one chip, wherein the third preset timer is a timer for benchmark time, and the preset chip is a chip comprising the third preset timer.

Wherein, the preset chip and the third preset timer may be any chip among the at least one chip and any timer in the chip, respectively. For example, in Fig. 8, the preset chip may be SOC1, and the third preset timer may be a network card timer. The first further chip may include one or more further chips, other than the preset chip. The first further chip may be a chip to be time synchronized with the third preset timer. The second further chip may be a chip to be time synchronized with the common timer. The second further chip may include one or more chip. The second further chip may include a same chip as the first further chip does, or may not include the same chip, which could be specifically set according to the requirement of the time domain. For example, the third preset timer is a network card timer in CORE Domain in SOC1; the network card timer of each chip may form a time domain, the further timer and the common timer may form a further time domain, and in the case, the first further chip is a further chip including a network card timer, and the second further chip is a further chip including the further timer. If each chip includes a network card timer and the further timer, the first further chip and the second further chip are the same chips.

In some optional embodiments, if the target chip is the preset chip, the target chip may transmit the time snapshot of the third preset timer of the target chip to the first further chip, to enable the first further chip to compensate a timer (a fourth preset timer) therein to be time synchronized with the third preset timer, and thus synchronize the fourth preset timer with the third preset timer. The target chip transmits the time snapshot of the common timer to the second further chip, to enable the second further chip to compensate a timer (a fifth preset timer) therein to be time synchronized with the common timer, and thus synchronize the fifth preset timer with the common timer. In the case, two time domains are thus formed in the plurality of chips.

In some optional embodiments, the preset timer and the common timer may be arranged in different chips.

In some optional embodiments, more time domains may be set as actually required.

In some optional embodiments, the target chip may also compensate further timers in the target chip to synchronize time of the further timers with time of the third preset timer, to achieve time synchronization of the further timers with the third preset timer. The target chip may compensate for time other timers in the target chip to be time synchronized with the common timer, to achieve time synchronization of the further timers with the common timer. For example, the third preset timer is a network card timer in CORE1 Domain of SOC1 in Fig. 8, and SOC1 may synchronize the network card timer in CORE2 Domain of SOC1 with the third preset timer, and synchronize further timers, other than the network card timer, in CORE1 Domain and CORE2 Domain with the common timer.

Step 2033d: in response to the target chip being the first other chip, determining, based on the time snapshot of the third preset timer and the time snapshot of a fourth preset timer in the target chip, a fifth time difference between the fourth preset timer and the third preset timer; performing time compensation on the fourth preset timer based on the fifth time difference, to synchronize time of the fourth preset timer with time of the third preset timer.

Wherein, the fourth preset timer may include one or more timers. For example, the fourth preset timer is a network card timer in each core domain of SOC2 in Fig. 8. See the previous embodiments for the specific operation of determining the fifth time difference and compensating the fourth preset timer for time, which will not be detailed herein for brevity.

Step 2034d: in response to the target chip being the second further chip, determining, based on the time snapshot of the common timer and the time snapshot of a fifth preset timer in the target chip, a sixth time difference between the fifth preset timer and the common timer; and performing time compensation on the fifth preset timer, to synchronize time of the fifth preset timer with time of the common timer.

Wherein, the fifth preset timer may include one or more timers. For example, the fifth preset timer may include further timers, other than the network card timer, in each core domain in SOC in Fig. 8. See the previous embodiments for the specific operation of determining the sixth time difference and compensating the fifth preset timer for time, which will not be detailed herein for brevity.

In some optional embodiments, one or more timers included in each core domain may be arranged in a core included in the core domain. That is, each core domain includes a core that includes timer(s) corresponding to one or more cores. For example, in Fig. 8, the network card timer, the PCIE timer, and the like, in each Domain may be timers arranged in the core. The specific relationship between the core and the timer is not limited herein.

In some optional examples, the steps 2031d through 2034d as described above may be executed by calling, by the processor, a corresponding instruction stored in the memory, or may be implemented by a corresponding unit included in the time synchronization module 53.

This embodiment can implement time synchronization among a plurality of time domains in at least one chip, so as to meet different time synchronization needs.

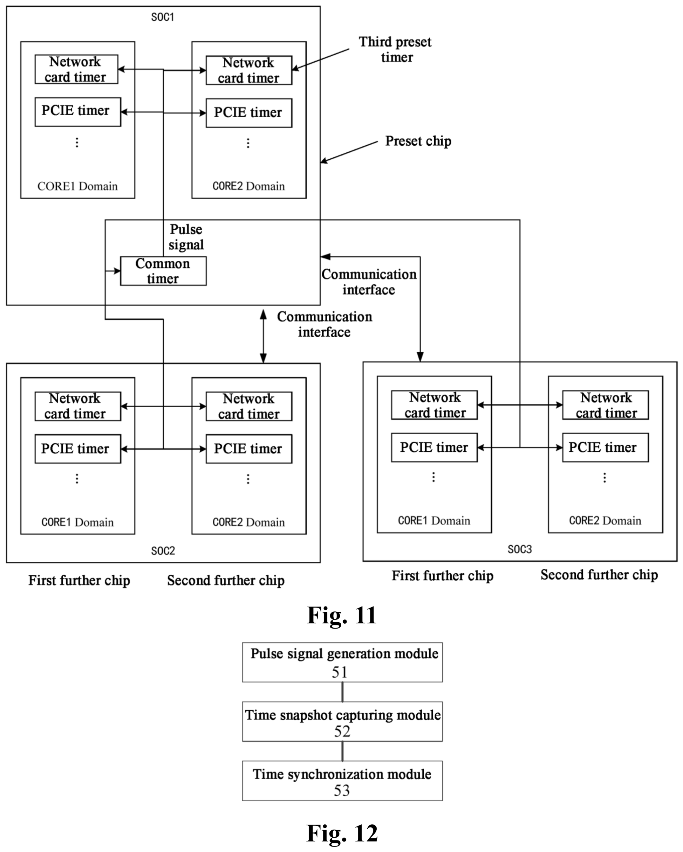

In some optional embodiments, Fig. 11 illustrates a schematic diagram of a principle of a method for chip time synchronization provided by another example embodiment of the present disclosure. As shown in Fig. 11, at least one chip includes three chips SOC1, SOC2 and SOC3, where SOC1 is the preset chip, and SOC2 and SOC3 act as both first further chips and second further chips. SOC1 is connected to SOC2 and SOC3 respectively via a communication interface, to implement time snapshot transmission. SOC1 includes a common timer, the pulse signal of the common timer may be transmitted to each timer corresponding to each core (not shown) in each core domain (e.g. CORE1 Domain, CORE2 Domain, or CORE3 Domain), and in a preset state of the pulse signal, each timer may be triggered to capture the time snapshot of the timer. After capturing the time snapshot, SOC1 may transmit the time snapshot of the network card timer corresponding to CORE1 to SOC2 and SOC3; SOC2 and SOC3 compensate the respective network card timers in SOC2 and SOC3 based on the time snapshot of the network card timer transmitted by SOC1, to synchronize time of the respective network card timers with time of the network card timer of CORE1 of SOC1, and thus form a network time domain. SOC1 may transmit the time snapshot of the common timer to SOC2 and SOC3, and SOC2 and SOC3 may compensate further timers, other than the network card timers therein, based on the time snapshot of the common timer transmitted by SOC1, to synchronize time of each of the further timers with time of the common timer, and thus form a common domain. In the case, two time domains are formed in the three chips.

In some optional embodiments, a further chip, other than the preset chip, may also include a common timer (also referred to as further common timer), and the pulse signal generated by the common timer of the preset chip may also transmit to the further common timer of the further chip, to cause the further common timer of the further chip to capture the time snapshot, and thus enable time of the further chip to synchronize time of the further common timer with the common timer of the preset chip. For example, in Fig. 11, SOC2 and SOC may include further common timers (see the setting of the common timer of SOC1), and the pulse signal output end of the common timer of SOC1 is connected to the further common timers of SOC2 and SOC3.

In some optional embodiments, for any of further chips, other than the preset chip, if the further chip includes a further common timer, the further chip can accomplish the objective of time synchronization of each timer in the further chip with the common timer of the preset chip through time synchronization of each timer therein with the further common timer in the further chip, thus fulfilling the purpose of time synchronization with the preset timer in the preset chip. Alternatively, the further common timer in the further chip is used for time synchronization of the timer within the further chip. See the previous embodiments for the specific principle, which will not be detailed herein for brevity.

The method for chip time synchronization provided by the embodiments of the present disclosure can support pulse signal sending by arranging a common timer in the chip; each hardware timer (including a common timer and a further timer) within the chip can receive the pulse signal; as an effect of the pulse signal, the timer hardware can automatically record a time snapshot of the timer, the time of the common timer can be synchronized with any time within the chip, and the further timer within the chip can then be synchronized with common timer. This process leaves out inter-core communication and thus can reduce the communication time. Second, the pulse signal of the common timer can be transmitted to a further chip via a core pin, to trigger the further chip to capture the time snapshot of the timer, and the time snapshot of the common timer can be transmitted to the further chip via a communication interface between chips, to facilitate time synchronization of the timer of the further chip with the common timer. In this way, the present disclosure can achieve time synchronization within a chip and between different chips. The time difference measurement methods for intra-ship and inter-chip time synchronization are consistent, which can simplify software architecture for time synchronization. When triggering, using a pulse signal, to capture time snapshots at the same time point and calculating the timer difference based on the time snapshots, no delay compensation is involved. Therefore, the present disclosure is free of the impact of software processing delay and can greatly improve the accuracy of the time difference. Moreover, the communication interface between the chips used in the method according to the embodiments of the present disclosure can support any communication interface to transmit a time snapshot, which is helpful for improving the adaptability of the method according to the embodiments of the present disclosure.

The various embodiments of the present disclosure, as described above, may be implemented separately or in any combination thereon, without conflict, and may be designed specifically according to the actual needs, which is not limited herein.

Any method for chip time synchronization provided by the embodiments of the present disclosure may be executed by any appropriate device with a data processing capability, including, but not limited to, a terminal device, a server, or the like. Alternatively, any method for chip time synchronization provided by the embodiments of the present disclosure may be executed by the processor. For example, the processor may execute any method for chip time synchronization described in the embodiments of the present disclosure by calling a corresponding instruction stored in the memory. Details will be omitted hereinafter.

It would be appreciated that: all or a part of the steps for implementing the method embodiments described above may be completed by hardware related to program instructions, where the program described above may be stored in a computer readable storage medium, and may perform, when executed, steps of the method embodiments described above; the storage medium includes any of various types of media capable of storing program code, for example, an ROM, an RAM, a magnetic disk, an optical disk, and the like.

### Example Apparatus

Fig. 12 illustrates a schematic diagram of a structure of an apparatus for chip time synchronization provided by an example embodiment of the present disclosure. The apparatus for chip time synchronization according to the embodiment may be used to implement the corresponding chip time synchronization method embodiment of the present disclosure. The apparatus shown in Fig. 12 may include: a pulse signal generation module 51, a time snapshot capturing module 52 and a time synchronization module 53.

The pulse signal generation module 51 is configured to generate a pulse signal according to a preset period.

Wherein, the pulse signal generation module 51 may be a pulse signal generation circuit, for example, a pulse generation circuit arranged in a timer (e.g. a common timer), a pulse signal generation circuit connected with a timer, or the like.

The time snapshot capturing module 52 is configured to, in response to the pulse signal, capture a time snapshot of at least one timer in at least one chip, the time snapshot representing time information of the timer in a preset state of the pulse signal.

Wherein, the time snapshot capturing module 52 may include a time snapshot capturing circuit (also referred to as time snapshot capturing unit, or capturing unit) in each timer in at least one chip. Alternatively, the time snapshot capturing module is a hardware module, to thus ensure consistency of a time when the time snapshot of each timer is captured.

The timer synchronization module 53 is configured to perform time synchronization on each timer in the at least one chip based on the time snapshot of each timer.

Wherein, the time synchronization module 53 may include a synchronization processing unit of each core of each chip, which may be a part for running synchronization processing software in the processor or core, or which may be a software program module.

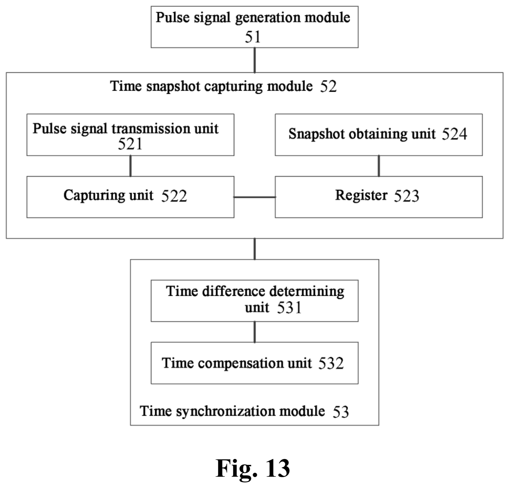

Fig. 13 illustrates a schematic diagram of a structure of an apparatus for chip time synchronization provided by another example embodiment of the present disclosure.

In some optional embodiments, as shown in Fig. 13, the time snapshot capturing module 52 may include: a pulse signal transmission unit 521, a capturing unit 522, a register 523 and a snapshot obtaining unit 524.

The pulse signal transmission unit 521 is configured to transmit the pulse signal to each timer in the at least one chip.

Wherein, the pulse signal transmission unit 521 may be any transmission line for transmitting a pulse signal.

The capturing unit 522 corresponds to each timer in the at least one chip and is configured to, in response to the pulse signal, write a time snapshot corresponding to the capturing unit into a corresponding register.

Wherein, each timer may include a corresponding capturing unit 522 for capturing the time snapshot of the timer.

The register 523 is configured to store the time snapshot.

Wherein, each timer may include a corresponding capturing unit 522 for capturing the time snapshot of the timer.

In some optional embodiments, for any of the timers, the register corresponding to the timer may be arranged in a hardware circuit of the timer, or may be arranged outside the timer, or may be arranged outside a core where the timer is located, which is not specifically limited herein.

The snapshot obtaining unit 524 is configured to obtain the time snapshot of each timer from the register corresponding to each timer.

Wherein, the snapshot obtaining unit 524 may be a part in a processor of a chip, or in a synchronization processing unit of a core.

In some optional embodiments, the snapshot obtaining unit 524 may also be used as a unit in the time synchronization module 53.

In some optional embodiments, the snapshot obtaining unit 524 is specifically configured to: detect an interrupt request that is triggered based on the pulse signal, or based on the register corresponding to each timer; and in response to detecting the interrupt request, obtain the time snapshot of each timer from the register corresponding to each timer.

In some optional embodiments, the time synchronization module 53 may include: a time difference determining unit 531 and a time compensation unit 532.

The time difference determining unit 531 is configured to determine, based on the time snapshot of a first preset timer among the at least one timer and the time snapshot of a further timer, other than the first preset timer, among the at least one timer, a first time difference between the further timer and the first preset timer.

The time compensation unit 532 is configured to perform time compensation on the further timer based on the first time difference, to synchronize time of the further timer with time of the first preset timer.

In some optional embodiments, the time difference determining unit 531 is specifically configured to:
in a case of using each of the at least one chip as a target chip respectively, in response to the target chip comprising the first preset timer, determine the first time difference between the further timer and the first preset timer based on the time snapshot of the further timer, other than the first preset timer, in the target chip; and transmit the time snapshot of the first preset timer to a further chip, other than the target chip, among the at least one chip; and in response to the target chip not comprising the first preset timer, receive the time snapshot of the first preset timer from a chip comprising the first preset timer, and determine, based on the time snapshot of the first preset timer and the time snapshot of each timer in the target chip, the first time difference between each timer and the first preset timer.

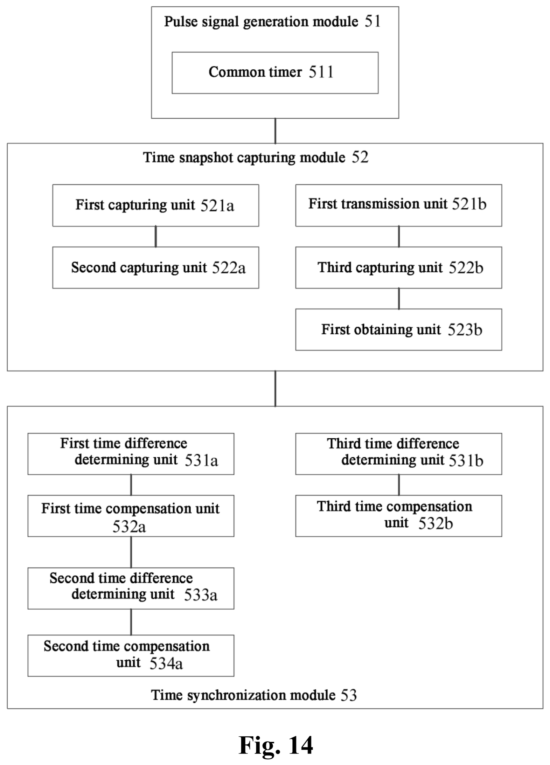

Fig. 14 illustrates a schematic diagram of an apparatus for chip time synchronization provided by a further example embodiment of the present disclosure.

In some optional embodiments, each of the at least one chip includes at least one processor core; each of the at least one processor core corresponds to at least one timer.

As shown in Fig. 14, the pulse signal generation module 51 may include: a common timer 511 in a preset chip among the at least one chip, for generating the pulse signal according to the preset period.

The time snapshot capturing module 52 may include: a first capturing unit 521a corresponding to each timer in the preset chip, and a second capturing unit 522a corresponding to the common timer in the preset chip.

The first capturing unit 521a corresponding to each timer in the preset chip is configured to, in response to the pulse signal, capture the time snapshot of the timer.

The second capturing unit 522a corresponding to the common timer in the preset chip is configured to, in response to the pulse signal, capture the time snapshot of the common timer.

The time synchronization module 53 may include:
a first time difference determining unit 531a in the preset chip, for determining, based on the time snapshot of a second preset timer corresponding to a preset processor core in the target chip and the time snapshot of the common timer, a second time difference between the common timer and the second preset timer;
a first time compensation unit 532a in the preset chip, for performing time compensation on the common timer based on the second time difference, to synchronize time of the common timer with time of the second preset timer;
a second time difference determining unit 533a in the preset chip, for performing time compensation on the time snapshot of the common timer based on the second time difference, to obtain a compensated time snapshot of the common timer, and determining, based on the time snapshot of a further timer, other than the second preset timer, and the compensated time snapshot of the common timer, a third time difference between the further timer and the common timer;
a second time compensation unit 534a in the preset chip, for performing time compensation on the further timer based on the third time difference corresponding to the further timer, to synchronize time of the further timer with time of the common timer having undergone the time compensation.

In some optional embodiments, the second time difference determining unit 533a in the preset chip is configured to determine, based on the time snapshot of the further timer and the time snapshot of the common timer, a third time difference between the further timer and the common timer.

The second time compensation unit 534a is configured to perform time compensation on the further timer based on the second time difference and the third time difference, to synchronize time of the further timer with time of the common timer having undergone the time compensation.

In some optional embodiments, the time snapshot capturing module 52 may further include:
a first transmission unit 521b for transmitting the compensated time snapshot of the common timer to a further chip, other than the preset chip, among the at least one chip;
a third capturing unit 522b corresponding to each timer in the further chip, for, in response to the pulse signal, capturing the time snapshot of the timer; and
a first obtaining unit 523b for obtaining the compensated time snapshot of the common timer from the preset chip.

The time synchronization module 53 may further include:
a third time difference determining unit 531b in the further chip, for determining, based on the time snapshot of each timer in the further chip and the compensated time snapshot of the common timer, a fourth time difference between each timer and the common timer; and
a third time compensation unit 532b in the further chip, for performing time compensation on each timer based on the fourth time difference corresponding to each timer, to synchronize time of each timer with time of the common timer having undergone time compensation.

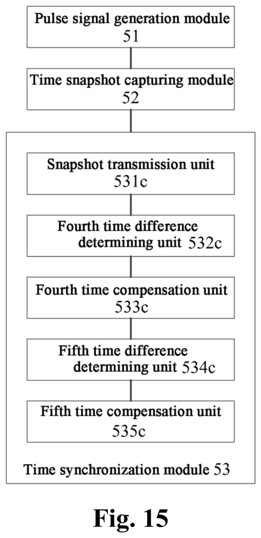

Fig. 15 illustrates a schematic diagram of a structure of an apparatus for chip time synchronization provided by a still further example embodiment of the present disclosure.

In some optional embodiments, as shown in Fig. 15, the time synchronization module 53 may include:
a snapshot transmission unit 531c in the preset chip among the at least one chip, for transmitting the time snapshot of a third preset timer of the preset chip to a first further chip, other than the preset chip, among the at least one chip, and transmitting the time snapshot of a common timer of the preset chip to a second further chip, other than the preset chip, among the at least one chip, wherein the third preset timer is a timer for benchmark time, and the preset chip is a chip including the third preset timer;
a fourth time difference determining unit 532c in the first other chip, for determining, based on the time snapshot of the third preset timer and the time snapshot of a fourth preset timer in the target chip, a fifth time difference between the fourth preset timer and the third preset timer;
a fourth time compensation unit 533c in the first other chip, for performing the time compensation on the fourth preset timer based on the fifth time difference, to synchronize time of the fourth preset timer with time of the third preset timer;
a fifth time difference determining unit 534c in the second other chip, for determining, based on the time snapshot of the common timer and the time snapshot of a fifth preset timer in the target chip, a sixth time difference between the fifth preset timer and the common timer; and
a fifth time compensation unit 535c in the second other chip, for performing time compensation on the fifth preset timer based on the sixth time difference, to synchronize time of the fifth preset timer with time of the common timer.

It is worth noting that respective units of respective modules according to the embodiments of the present disclosure may be distributed in the same chip or different chips, or may be distributed in the same core or difference cores within the same chip or different chips.

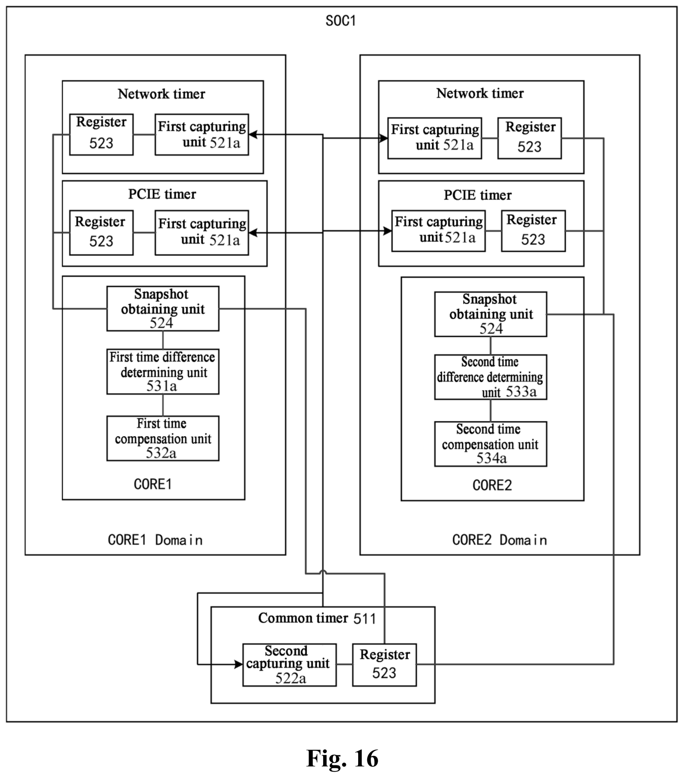

In some optional embodiments, Fig. 16 illustrates a schematic diagram of an apparatus for chip time synchronization provided by a still further example embodiment of the present disclosure. As shown in Fig. 16, for SOC1 as the preset chip, the chip may include a common timer 511 and at least one core domain. For example, two core domains CORE1 Domain and CORE2 Domain are taken as an example in Fig. 16, where each core domain may include a core, and a plurality of timers (e.g. a network card timer, and a PCIE timer) each of which includes a first capturing unit 521a and a register 523. The common timer 511 may include a second capturing unit 522a and a register 523. Each core may include a snapshot obtaining unit 524 for obtaining a time snapshot from the register 523. The preset core CORE1 in SOC1 includes a first time difference determining unit 531a and a first time compensation unit 532a. CORE2, not the preset core, in SOC1 includes a second time determining unit 533a and a second time compensation unit 534a. For the specific function of each unit, see the previous embodiments.

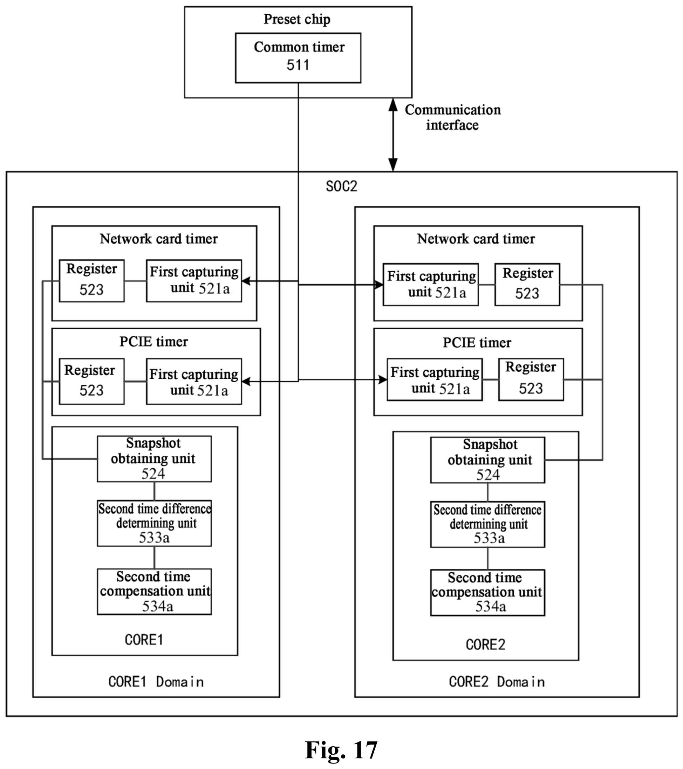

In some optional embodiments, Fig. 17 illustrates a schematic diagram of a structure of an apparatus for chip time synchronization provided by a still further example embodiment of the present disclosure. As shown in Fig. 17, for SOC2, not the preset chip, each timer in SOC2 may include a first capturing unit 521a and a register 523. Each core in SOC2 may include a snapshot obtaining unit 524, a second time difference determining unit 533a and a second time compensation unit 534a. For the specific function of each unit, see the previous embodiments.

For the advantageous technical effects corresponding to the example embodiment of the apparatus, see the corresponding advantageous technical effects described above in the section of Example Method, which will not be detailed herein for brevity.

### Example Electronic Device

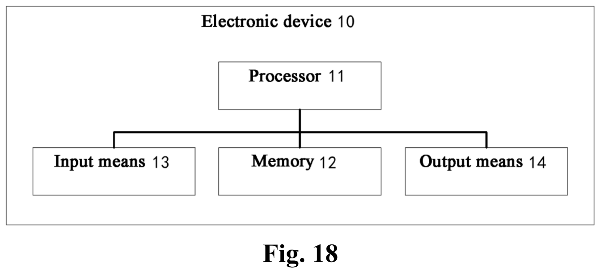

Fig. 18 illustrates a diagram of a structure of an electronic device provided by embodiments of the present disclosure, which includes at least one processor 11 and a memory 12.

The processor 11 may be a Central Processing Unit (CPU) or other form of processing unit with a data processing capability and/or an instruction execution capability, and may control other components in the electronic device 10 to perform a desired function.

The memory 12 may include one or more computer program products that may include various forms of computer readable storage media, for example, a volatile memory and/or a non-volatile memory. The volatile memory may include, for example, a Random Access Memory (RAM) and/or a cache, and the like. The non-volatile memory may include, for example, a Read-Only Memory (ROM), a hard disk, a flash memory, and the like. The computer readable storage medium may have one or more computer program instructions stored thereon, and the processor 11 may run the one or more computer program instructions to implement the methods described above in the various embodiments of the present disclosure, and/or other desired functions.

In an example, the electronic device 10 may include: input means 13 and output means 14, where the components are interconnected via a bus system and/or a connection mechanism in other form (not shown).

The input means 13 may further include, for example, a keyboard, a mouse, a touch screen, a microphone, various sensors, and the like. The sensors may include, for example, an image sensor (e.g., a camera), laser radar, millimeter-wave radar, ultrasonic radar, a positioning sensor, a pressure sensor, an air quality sensor, a temperature sensor, and the like. The image sensor, laser radar, millimeter-wave radar, ultrasonic radar, and the like may be used to sense a surrounding environment, i.e., to detect moving and static objects in the surrounding environment. The moving and static objects may include, for example, static objects such as lane lines, curbs, arrows, signs, trees, buildings, and the like, and moving objects such as surrounding vehicles, pedestrians, cyclists, and the like. The positioning sensor is used to position a mobile device (e.g. a current vehicle, a robot, or the like) where the electronic device is located. The positioning sensor may include, for example, an Inertial Measurement Unit (IMU), a Global Positioning System (GPS), and the like. The pressure sensor may be used to detect a seat pressure. The temperature sensor may be used to detect a temperature inside a vehicle cabin. The air quality sensor may be used to detect air quality in the vehicle cabin.

The output means 14 may output various types of information to the outside, which may include, for example, a display, a speaker, a printer, a communication network and remote output means connected therewith, and the like.

For simplicity, Fig. 18 only shows some components related to the present disclosure in the electronic device 10, and omits therefrom components such as a bus, an input/output interface, and the like. In addition, according to the specific application, the electronic device 10 may further include any other appropriate components.

In addition, embodiments of the present disclosure further provide an electronic device including the apparatus for chip time synchronization provided by any of the embodiments described above.

### Example computer program product and computer readable storage medium

In addition to the methods and apparatus described above, the embodiments of the present disclosure further provide a computer program product including computer program instructions, where the computer program instructions, when run by the processor, cause the processor to execute steps of the methods according to the various embodiments of the present disclosure described above in the "Example Method" section.

Computer program code for performing operations of the present disclosure may be written by using one or more program design language or any combination. The program design language includes, but is not limited to, object oriented program design language such as Java, C++, and the like, and further includes conventional process-type program design language such as "C" or similar program design language. The program code may be completely or partially executed on a user computer, performed as an independent software packet, partially executed on the user computer and partially executed on a remote computer, or completely executed on the remote computer or a server.

Moreover, the embodiments of the present disclosure may further relate to a computer readable storage medium having computer program instructions stored thereon, where the computer program instructions, when run by the processor, cause the processor to execute steps of the methods according to the various embodiments of the present disclosure described above in the "Example Method" section.

The computer readable storage medium may be a readable medium or any combination of a plurality of readable media. The readable medium may be a readable signal medium or a readable storage medium. A readable medium may include, but is not limited to, an electronic, magnetic, optical, electromagnetic, infrared, or semiconductor system, apparatus, or device, or any suitable combination of the foregoing. More specific examples of a computer-readable storage medium would include an electrical connection based on one or more wires, a portable computer diskette, a hard disk, a Random Access Memory (RAM), a Read-Only Memory (ROM), an Erasable Programmable Read-Only Memory (EPROM or flash memory), an optical fiber, a Compact Disc Read-Only memory (CD-ROM), an optical storage device, a magnetic storage device, or any suitable combination of the foregoing.

Although the basic principles of the present disclosure have been described above with reference to the specific embodiments, the advantages, benefits, effects, and the like are merely mentioned herein as examples, without limitations, which should not be construed as essentials of each embodiment of the present disclosure. In addition, the details disclosed above are provided only for illustration and ease of understanding, rather than limitation, which do not require that the present disclosure be implemented with those details.

Those skilled in the art are allowed to make various modifications and variations to the present disclosure without departing the spirits and scope described herein. Therefore, if the modifications and variations thereto fall within the scope defined by the claims of the present disclosure and the equivalents thereof, the present disclosure is also intended to cover those modifications and variations.

## Claims

1. A method for chip time synchronization, comprising:
generating a pulse signal according to a preset period;
in response to the pulse signal, capturing a time snapshot of at least one timer in at least one chip, the time snapshot representing time information of the timer in a preset state of the pulse signal; and
performing time synchronization on each timer in the at least one chip based on the time snapshot of said each timer.

2. The method of claim 1, wherein performing the time synchronization of said each timer in the at least one chip based on the time snapshot of said each timer comprises:
determining, based on the time snapshot of a first preset timer among the at least one timer and the time snapshot of a further timer, other than the first preset timer, among the at least one timer, a first time difference between the further timer and the first preset timer; and
performing time compensation on the further timer based on the first time difference, to synchronize time of the further timer with time of the first preset timer.

3. The method of claim 2, wherein determining, based on the time snapshot of the first preset timer among the at least one timer and the time snapshot of the further timer, other than the first preset timer, among the at least one timer, the first time difference between the further timer and the first preset timer, comprises:
in a case of using each of the at least one chip as a target chip respectively, in response to the target chip comprising the first preset timer, determining, based on the time snapshot of the further timer, other than the first preset timer, in the target chip, the first time difference between the further timer and the first preset timer; and transmitting the time snapshot of the first preset timer to a further chip, other than the target chip, among the at least one chip; and
in response to the target chip not comprising the first preset timer, receiving the time snapshot of the first preset timer from a chip comprising the first preset timer, and determining, based on the time snapshot of the first preset timer and the time snapshot of said each timer in the target chip, the first time difference between said each timer and the first preset timer.

4. The method of claim 1, wherein, in response to the pulse signal, capturing the time snapshot of the at least one timer in the at least one chip, comprises:
transmitting the pulse signal to said each timer in the at least one chip such that said each timer, in response to the pulse signal, writes a time snapshot corresponding said each timer into a corresponding register; and
obtaining the time snapshot of said each timer from the register corresponding to said each timer.

5. The method of claim 4, wherein obtaining the time snapshot of said each timer from the register corresponding to said each timer comprises:
detecting an interrupt request that is triggered based on the pulse signal, or based on the register corresponding to said each timer; and
in response to detecting the interrupt request, obtaining the time snapshot of said each timer from the register corresponding to said each timer.

6. The method of claim 1, wherein each of the at least one chip comprises at least one processor core; each of the at least one processor core corresponds to at least one of the timers;
generating the pulse signal according to the preset period comprises:
generating, by a common timer in a preset chip among the at least one chip, the pulse signal according to the preset period;
in response to the pulse signal, capturing the time snapshot of the at least one timer in the at least one chip, comprises:
in a case of using each of the at least one chip as a target chip respectively, in response to the target chip being the preset chip, capturing, by the target chip and in response to the pulse signal, the time snapshot of at least one timer corresponding to at least one processor core in the target chip, and the time snapshot of the common timer;
performing the time synchronization on said each timer in the at least one chip based on the time snapshot of said each timer, comprises:
determining, based on the time snapshot of a second preset timer corresponding to a preset processor core in the target chip and the time snapshot of the common timer, a second time difference between the common timer and the second preset timer;
performing the time compensation on the common timer based on the second time difference, to synchronize time of the common timer and time of the second preset timer;
performing the time compensation on the time snapshot of the common timer based on the second time difference, to obtain a compensated time snapshot of the common timer, and determining, based on the time snapshot of a further timer, other than the second preset timer, in the target chip and the compensated time snapshot of the common timer, a third time difference between the further timer and the common timer;
performing the time compensation on the further timer based on the third time difference corresponding to the further timer, to synchronize time of the further timer with time of the common timer having undergone time compensation; or
determining, based on the time snapshot of the further timer and the time snapshot of the common timer, a third time difference between the further timer and the common timer;
performing the time compensation on the further timer based on the second time difference and the third time difference, to synchronize time of the further timer with time of the common timer having undergone the time compensation.

7. The method of claim 6, after capturing the time snapshot of the at least one timer corresponding to the at least one processor core in the target chip, and after the time snapshot of the common timer, further comprising:
transmitting the compensated time snapshot of the common timer to a further chip, other than the preset chip, among the at least one chip;
in response to the pulse signal, capturing the time snapshot of the at least one timer in the at least one chip, further comprises:
in a case that the target chip is not the preset chip, capturing, by the target chip and in response to the pulse signal, the time snapshot of the at least one timer corresponding to the at least one processor core in the target chip, and obtaining the compensated time snapshot of the common timer from the preset chip;
performing the time synchronization on said each timer in the at least one chip based on the time snapshot of said each timer, further comprises:
determining, based on the time snapshot of said each timer in the target chip and the compensated time snapshot of the common timer, a fourth time difference between said each timer and the common timer; and
performing the time compensation on said each timer based on the fourth time difference corresponding to said each timer, to synchronize said each timer with the common timer having undergone the time compensation.

8. The method of claim 1, wherein performing the time synchronization on said each timer in the at least one chip based on the time snapshot of said each timer, comprises:
in a case of using each of the at least one chip as a target chip respectively, in response to the target chip being a preset chip, transmitting the time snapshot of a third preset timer of the target chip to a first further chip, other than the preset chip, among the at least one chip, and transmitting the time snapshot of a common timer of the target chip to a second further chip, other than the preset chip, among the at least one chip, wherein the third preset timer is a timer for benchmark time, and the preset chip is a chip comprising the third preset timer;
in response to the target chip being the first further chip, determining, based on the time snapshot of the third preset timer and the time snapshot of a fourth preset timer in the target chip, a fifth time difference between the fourth preset timer and the third preset timer; performing the time compensation on the fourth preset timer based on the fifth time difference, to synchronize time of the fourth preset timer with time of the third preset timer; or
in response to the target chip being the second further chip, determining, based on the time snapshot of the common timer and the time snapshot of a fifth preset timer in the target chip, a sixth time difference between the fifth preset timer and the common timer; and performing time compensation on the fifth preset timer based on the sixth time difference, to synchronize time of the fifth preset timer with time of the common timer.

9. An apparatus for chip time synchronization, comprising:
a pulse signal generation module configured to generate a pulse signal according to a preset period;
a time snapshot capturing module configured to, in response to the pulse signal, capture a time snapshot of at least one timer in at least one chip, the time snapshot representing time information of the timer in a preset state of the pulse signal; and
a time synchronization module configured to perform time synchronization on each timer in the at least one chip based on the time snapshot of said each timer.

10. The apparatus of claim 9, wherein the time snapshot capturing module comprises:
a pulse signal transmission unit configured to transmit the pulse signal to said each timer in the at least one chip;
a capturing unit corresponding to said each timer in the at least one chip, configured to, in response to the pulse signal, write a time snapshot corresponding to the capturing unit into a corresponding register;
the register configured to store the time snapshot; and
a snapshot obtaining unit configured to obtain the time snapshot of said each timer from the register corresponding to said each timer.

11. The apparatus of claim 9, wherein each of the at least one chip comprises at least one processor core; each of the at least one processor core corresponds to at least one of the timers;
the pulse signal generation module comprises:
a common timer in a preset chip among the at least one chip, configured to generate the pulse signal according to the preset period;
the time snapshot capturing module comprises:
a first capturing unit corresponding to said each timer in the preset chip, configured to, in response to the pulse signal, capture the time snapshot of the timer; and
a second capturing unit corresponding to the common timer in the preset chip, configured to, in response to the pulse signal, capture the time snapshot of the common timer;
the time synchronization module comprises:
a first time difference determining unit in the preset chip, configured to determine, based on the time snapshot of a second preset timer corresponding to a preset processor core in the target chip and the time snapshot of the common timer, a second time difference between the common timer and the second preset timer;
a first time compensation unit in the preset chip, configured to perform time compensation on the common timer based on the second time difference, to synchronize time of the common timer and time of the second preset timer;
a second time difference determining unit in the preset chip, configured to perform time compensation on the time snapshot of the common timer based on the second time difference, to obtain a compensated time snapshot of the common timer, and determine, based on the time snapshot of a further timer, other than the second preset timer, and the compensated time snapshot of the common timer, a third time difference between the further timer and the common timer;
a second time compensation unit in the preset chip, configured to perform time compensation on the further timer based on the third time difference corresponding to the further timer, to synchronize time of the further timer with time of the common timer having undergone the time compensation; or
a second time difference determining unit configured to determine, based on the time snapshot of the further timer and the time snapshot of the common timer, a third time difference between the further timer and the common timer;
a second time compensation unit configured to perform time compensation on the further timer based on the second time difference and the third time difference, to synchronize time of the further timer with time of the common timer having undergone the time compensation.

12. A computer readable storage medium having a computer program stored thereon, wherein the computer program is used to execute the method for chip time synchronization of any of claims 1-8.

13. An electronic device, comprising:
a processor; and
a memory for storing executable instructions by the processor;
wherein the processor is configured to read the executable instructions from the memory, and execute the instructions to implement the method for chip time synchronization of any of claims 1-8; or
the electronic device comprises the apparatus for chip time synchronization of any of claims 9-11.
